# EUROPÄISCHE PATENTSCHRIFT

(11) **EP 3 478 696 B1**
(45) Veröffentlichungstag und Bekanntmachung des Hinweises auf die Patenterteilung: **15.04.2020**
(21) Anmeldenummer: 16756662.9
(22) Anmeldetag: 17.08.2016
(51) Int. Cl.: C07F 9/50

(54) **VERFAHREN ZUR HERSTELLUNG VON TETRAKIS(TRIHYDROCARBYLPHOSPHAN)PALLADIUM(0)**
METHOD FOR THE PREPARATION OF TETRAKIS (TRIHYDROCARBYLPHO PHINE) PALLADIUM (0)
PROCEDE DE FABRICATION DE TETRAKIS (TRIHYDROCARBYLEPHOSPHINE) PALLADIUM (0)

(30) Priorität: 04.07.2016 WO PCT/EP2016/065715
(43) Veröffentlichungstag der Anmeldung: 08.05.2019
(73) Patentinhaber: Heraeus Deutschland GmbH & Co. KG, 63450 Hanau (DE)
(72) Erfinder: EWEINER, Florian, 63452 Hanau (DE); LÄSSIG, Walter, 63571 Gelnhausen (DE); WALTER, Richard, 63755 Alzenau (DE)
(74) Vertreter: Heraeus IP
(86) Internationale Anmeldenummer: PCT/EP2016/069485
(87) Internationale Veröffentlichungsnummer: WO 2018/006986

(56) Entgegenhaltungen:
- JAN E. BAECKVALL ET AL: "Stereo- and regioselective palladium-catalyzed 1,4-acetoxychlorination of 1,3-dienes. 1-Acetoxy-4-chloro-2-alkenes as versatile synthons in organic transformations", JOURNAL OF THE AMERICAN CHEMICAL SOCIETY, Bd. 107, Nr. 12, 1. Juni 1985 (1985-06-01) , Seiten 3676-3686, XP055240482, US ISSN: 0002-7863, DOI: 10.1021/ja00298a043
- PATRICK A. MCLAUGHLIN ET AL: "Fluoride-Catalyzed Reduction of Palladium(II) to Palladium(0)-Phosphine Complexes", ORGANOMETALLICS, Bd. 17, Nr. 26, 1. Dezember 1998 (1998-12-01), Seiten 5937-5940, XP055240395, US ISSN: 0276-7333, DOI: 10.1021/om980490s

## Beschreibung

Aus der modernen organischen Chemie sind Übergangsmetall-katalysierte Kreuzkupplungsreaktionen zur Bindungsknüpfung, vor allem zwischen ungesättigten C-Atomen, nicht mehr weg zu denken. Beispielhaft seien hier die Suzuki-Kupplung zur Herstellung von Wirkstoffen, wie dem Antibioticum Vancomycin oder die Stille-Kupplung zur Herstellung von konjugierten Polymeren genannt. Mit Abstand am häufigsten kommen hierfür als Übergangsmetall-Katalysatoren Pd(0)-Komplexe zum Einsatz. Eine wichtige Klasse von Pd(0)-Komplexen sind die Palladium(0)-Triarylphosphan-Komplexe wie z.B. das Tetrakis(triphenylphosphan)palladium(0).

Die Synthese von Tetrakis(triphenylphosphan)palladium(0) ist aus Coulson, Tetrakis(triphenylphosphine)palladium(0), Inorganic Synthesis; 1972, Seiten 121-123 bekannt. Dabei wird ausgehend von PdCl₂ und PPh₃ in DMSO-Lösung mit Hydrazinhydrat der Komplex Tetrakis(triphenylphosphan)palladium mit Pd in der Oxidationsstufe (0) erhalten. Da Hydrazinhydrat und andere Hydrazinderivate giftig sind und krebserzeugend sein können, gibt es andauernde Bestrebungen, Hydrazinhydrat und -derivate als Reaktanten zu ersetzen, um die Arbeitssicherheit zu erhöhen.

WO 2010/128316 beschreibt ein Hydrazinhydrat-freies Herstellungsverfahren, bei dem eine Pd(II)-Verbindung in mindestens einem Lösemittel mit einer Base und einem Liganden L (PPh₃) umgesetzt wird. Die Ausbeuten liegen dabei typischer Weise zwischen 66 und 93 %.

Jan E. Baeckvall et al. beschreiben in J. Am. Chem. Soc. 1985, 107(12), 3676-3686 ein Verfahren zur Herstellung von [Pd(PPh3)4] durch Umsetzung von [Pd(PhCN)2Cl2] mit Diethylamin, PPh3 und Butadien in Aceton.

John G. Verkade et al. beschreiben in Organometallics 1998, 17, 5937-5940 ein Verfahren zur Herstellung von [Pd(PPh3)4] durch Umsetzung von PdCl2 mit PPh3 in DMSO, organischen Basen und nBu4NF als Katalysator.

Aufgabe der vorliegenden Erfindung war es, ein Verfahren zur Herstellung von Tetrakis(trihydrocarbylphosphan)palladium(0) zu entwickeln, welches eine möglichst hohe Ausbeute ermöglicht und dabei auf die Verwendung von Hydrazinhydrat verzichtet.

Dazu wird ein Verfahren bereitgestellt, bei dem Pd(II)- bzw. Pd(IV)-Verbindungen in organischem Lösemittel unter Zuhilfenahme von mindestens einer Base und mindestens einem organischen Reduktionsmittel mit mindestens einem Trihydrocarbylphosphan-Liganden umgesetzt werden.

Konkret wird das Problem gelöst durch ein Verfahren zur Herstellung von Tetrakis(trihydrocarbylphosphan)palladium(0) in organischem Lösemittel, wobei das organische Lösemittel zu 50 bis 100 Gewichts-% aus mindestens einem polar-aprotischen Lösemittel besteht, dadurch gekennzeichnet, dass
a) mindestens eine Palladiumverbindung ausgewählt aus der Gruppe bestehend aus Palladium(II)-Verbindungen und Palladium(IV)-Verbindungen, die in dem organischen Lösemittel löslich sind, mit
b) mindestens einer Base, ausgewählt aus der Gruppe bestehend aus Alkalimetallhydroxiden, Alkalimetallcarbonaten, Alkalimetallhydrogencarbonaten, Alkalimetall-C₁-C₄-alkoholaten, Ammoniumcarbonat, Ammoniumhydrogencarbonat, Erdalkalimetallhydroxiden, Erdalkalimetallcarbonaten, Erdalkalimetallhydrogencarbonaten, Erdalkalimetall-C₁-C₄-alkoholaten und Alkylaminen mit insgesamt 2 bis 12 Kohlenstoffatomen,
c) mindestens einem Trihydrocarbylphosphan, und
d) mindestens einem organischen Reduktionsmittel, das von den restlichen in dem Verfahren eingesetzten Komponenten verschieden ist,
umgesetzt wird.

Die im Zusammenhang mit der Komponente b) und in der weiteren Folge auch im Zusammenhang mit der Komponente d) verwendeten Begriffe "Alkalimetall" bzw. "Erdalkalimetall" stehen für Lithium, Natrium oder Kalium bzw. für Magnesium, Calcium oder Barium.

Durch das vorliegende Verfahren kann Tetrakis(trihydrocarbylphosphan)palladium(0) ohne Verwendung von Hydrazinhydrat in Ausbeuten von mehr als 95%, bezogen auf das Palladium in der eingesetzten mindestens einen Palladiumverbindung hergestellt werden.

Die mindestens eine, bevorzugt nur eine Palladiumverbindung kann ausgewählt sein aus Palladiumverbindungen in den Oxidationsstufen (II) und (IV), die in dem organischen Lösemittel löslich sind. Bevorzugt handelt es sich bei der mindestens einen Palladiumverbindung um eine Verbindung ausgewählt aus der Gruppe bestehend aus Alkalitetrahalogenopalladaten(II), Ammoniumtetrahalogenopalladaten(II), Alkalihexahalogenopalladaten(IV), Ammoniumhexahalogenopalladaten(IV), Palladium(II)halogeniden, Palladium(II)nitrat, Palladium(II)sulfat, Bis(trihydrocarbylphosphan)palladium(II)dihalogeniden, Pd(COD)Cl₂ (COD = Cyclooctadien), Pd(CH₃CN)₂Cl₂, Pd(C₆H₅CN)₂Cl₂ und Palladium(II)acetat.
Die Halogene können Chlor, Brom oder lod sein, insbesondere Chlor oder Brom. In einer bevorzugten Ausführungsform ist die Palladiumverbindung PdCl₂.

Der im Zusammenhang mit den Alkalitetrahalogenopalladaten(II) und den Alkalihexahalogenopalladaten(IV) der Komponente a) verwendete Begriff "Alkali" steht für Natrium oder Kalium.

Erfindungsgemäß umfasst das organische Lösemittel mindestens ein, bevorzugt nur ein polaraprotisches organisches Lösemittel in einer Menge von 50 bis 100 Gewichts-%, insbesondere in einer Menge von 90 bis 100 Gewichts-%, speziell 100 Gewichts-%. Im Kontext der vorliegenden Erfindung bedeutet "polar" ein Lösemittel mit einem E_{T}(30)-Wert von 150 kJ/mol oder mehr. Bevorzugt hat das polar-aprotische Lösemittel einen E_{T}(30)-Wert von 170 kJ/mol oder mehr (zu E_{T}(30)-Werten siehe C. Reichardt, Chem. Rev. 1994, 94, 2319 - 2358). Bevorzugte polar-aprotische Lösemittel sind ausgewählt aus der Gruppe bestehend aus tertiären Carbonsäureamiden (z.B. DMF), Sulfoxiden (z.B. DMSO), Ketonen (z.B. Aceton), Lactonen (z.B. gamma-Butyrolacton), Lactamen (z.B. N-Methyl-2-pyrrolidon), Nitrilen (z.B. Acetonitril), Harnstoffderivaten, Sulfonen, Carbonsäureestern (z.B. Essigsäureethylester) und Kohlensäureestern. Besonders bevorzugt sind DMF, DMSO, Aceton, gamma-Butyrolacton, N-Methyl-2-pyrrolidon, Essigsäureethylester und Acetonitril.

Neben dem mindestens einen polar-aprotischen organischen Lösemittel können auch ein oder mehrere weitere organische Lösemittel verwendet werden, die sich mit dem mindestens einen polar-aprotischen Lösemittel mischen. Solche weiteren organischen Lösemittel können ausgewählt sein aus der Gruppe der polar-protischen Lösemittel (z.B. Alkohole) und der apolaren Lösemittel (wie z.B. Pentan, Hexan, Heptan, Benzol, Toluol, Xylol). Bevorzugte polarprotische Lösemittel sind Alkohole wie z.B. Methanol, Ethanol, 1-Propanol, 2-Propanol, 1-Butanol, 2-Butanol, tert-Butanol und Benzylalkohol. Das oder die weiteren organischen Lösemittel machen entsprechend den vorstehend gemachten Mengenangaben für das mindestens eine polar-aprotische Lösemittel 0 bis 50 Gewichts-%, insbesondere 0 bis 10 Gewichts-%, speziell 0 Gewichts-% des gesamten organischen Lösemittels aus.

Die mindestens eine, bevorzugt nur eine Base kann ausgewählt sein aus der Gruppe bestehend aus Alkalimetallhydroxiden, Alkalimetallcarbonaten, Alkalimetallhydrogencarbonaten, Alkalimetall-C₁-C₄-alkoholaten, Ammoniumcarbonat, Ammoniumhydrogencarbonat, Erdalkalimetallhydroxiden, Erdalkalimetallcarbonaten, Erdalkalimetallhydrogencarbonaten, Erdalkalimetall-C₁-C₄-alkoholaten und Alkylaminen mit insgesamt 2 bis 12 Kohlenstoffatomen. Bevorzugt sind Hydroxide, insbesondere Alkalimetallhydroxide, wie z.B. Natriumhydroxid, Hydrogencarbonate, insbesondere Alkalimetallhydrogencarbonate, wie z.B. Natriumhydrogencarbonat, Alkalimetallcarbonate, wie z.B. Natriumcarbonat und Trialkylamine, wie z.B. Triethylamin.

Insbesondere bevorzugt sind Alkalimetallhydroxide, wie z.B. Natriumhydroxid, Hydrogencarbonate, insbesondere Alkalimetallhydrogencarbonate, wie z.B. Natriumhydrogencarbonat, Alkalimetallcarbonate, wie z.B. Natriumcarbonat, und Triethylamin, speziell die anorganischen Basen, d.h. die Alkalimetallhydroxide, wie z.B. Natriumhydroxid, die Hydrogencarbonate, insbesondere die Alkalimetallhydrogencarbonate, wie z.B. Natriumhydrogencarbonat, die Alkalimetallcarbonate, wie z.B. Natriumcarbonat.

In einer Ausführungsform ist das mindestens eine, bevorzugt nur eine organische Reduktionsmittel ausgewählt aus der Gruppe bestehend aus Ascorbinsäure, Ameisensäure, sowie Alkalimetall-, Erdalkalimetall- und Ammoniumsalzen der vorgenannten Säuren, reduzierend wirkenden Phenolen, wie z.B. Hydrochinon, Brenzcatechin, Resorcin, Pyrogallol, Hydroxyhydrochinon, reduzierend wirkenden Phenolderivaten und reduzierend wirkenden Zuckern, wie z.B. Mono-, Di- oder Oligosaccharide. Besonders bevorzugte reduzierend wirkende Zucker sind Mannose, Glucose, Fructose, Maltose, Lactose und Galactose. Bevorzugt als organische Reduktionsmittel sind Ascorbinsäure und Ameisensäure, insbesondere Ascorbinsäure. Das mindestens eine organische Reduktionsmittel ist von den restlichen im erfindungsgemäßen Verfahren eingesetzten Komponenten (einschließlich organische Lösemittel sowie Komponenten a) bis c)) verschieden.

Die drei Hydrocarbylreste des mindestens einen, bevorzugt nur einen Trihydrocarbylphosphans können ausgewählt sein aus der Gruppe bestehend aus unsubstituierten und substituierten Arylresten, offenkettigen Alkylresten und cyclischen Alkylresten, und zwar in beliebiger Kombination. Bevorzugt weist das Trihydrocarbylphosphan drei gleiche Hydrocarbylreste auf. Substituierte Arylreste der Trihydrocarbylphosphane können jeweils mono-, di- oder trisubstituiert sein. Als Alkylsubstituenten sind solche mit 1 - 10 Kohlenstoffatomen bevorzugt.

In einer Ausführungsform handelt es sich um Trialkylphosphane mit drei jeweils 1 - 10 Kohlenstoffatome aufweisenden Alkylresten. Die Alkylreste der Trialkylphosphane können gleich oder verschieden sein. Bevorzugte Alkylreste solcher Trialkylphosphane sind Methyl-, Ethyl-, n-Propyl-, Isopropyl-, n-Butyl-, tert-Butyl-, Cyclohexyl- und Adamantyl-Reste, insbesondere Ethyl-, n-Propyl-, Isopropyl-, n-Butyl-, tert-Butyl- und Cyclohexyl-Reste.

In einer bevorzugten Ausführungsform handelt es sich um Triarylphosphane, insbesondere unsubstituiertes Triphenylphosphan.

Die Trihydrocarbylphosphane können im Übrigen auch ausgewählt sein aus der Gruppe bestehend aus:
Phenyl-di-tert-butylphosphan, Di-tert-Butyl-Neopentylphosphan, Tricyclohexylphosphan, Tri(tert-butyl)phosphan, Tris(para-tolyl)phosphan, Tris(ortho-tolyl)phosphan, Tris(2,4,6,-trimethylphenyl)phosphan, Tris(2,6-dimethylphenyl)phosphan, 1-Adamantyl-Di-tert-butylphosphan, Benzyl-Di-1-Adamantylphosphan, n-Butyl-Di-1-Adamantylphosphan, Cyclohexyl-Di-(tert-butyl)phosphan, Cyclohexyl-Diphenylphosphan.

Bei einer bevorzugten Ausführungsform der vorliegenden Erfindung handelt es sich um ein Verfahren zur Herstellung von Tetrakis(trihydrocarbylphosphan)palladium(0) in organischem Lösemittel, das zu 50 bis 100 Gewichts-%, bevorzugt 100 Gewichts-% aus mindestens einem polar-aprotischen Lösemittel ausgewählt aus der Gruppe bestehend aus DMF, DMSO, Aceton, gamma-Butyrolacton, N-Methyl-2-pyrrolidon, Essigsäureethylester und Acetonitril, insbesondere jedoch zu 50 bis 100 Gewichts-%, bevorzugt 100 Gewichts-% aus DMSO besteht, dadurch gekennzeichnet, dass
a) mindestens eine Palladiumverbindung ausgewählt aus der Gruppe bestehend aus Alkalitetrahalogenopalladaten(II), Ammoniumtetrahalogenopalladaten(II), Alkalihexahalogenopalladaten(IV), Ammoniumhexahalogenopalladaten(IV), Palladium(II)halogeniden, Palladium(II)nitrat, Palladium(II)sulfat, Bis(trihydrocarbylphosphan)palladium(II)dihalogeniden, Pd(COD)Cl₂ (COD = Cyclooctadien), Pd(CH₃CN)₂Cl₂, Pd(C₆H₅CN)₂Cl₂ und Palladium(II)acetat, insbesondere jedoch PdCl₂, mit
b) mindestens einer Base, ausgewählt aus der Gruppe bestehend aus Alkalimetallhydroxiden, Alkalimetallcarbonaten, Alkalimetallhydrogencarbonaten und Triethylamin, insbesondere jedoch ausgewählt aus der Gruppe bestehend aus Alkalimetallhydroxiden, Alkalimetallcarbonaten und Alkalimetallhydrogencarbonaten,
c) mindestens einem Trihydrocarbylphosphan, insbesondere Triphenylphosphan, und
d) mindestens einem Reduktionsmittel ausgewählt aus der Gruppe bestehend aus Ameisensäure, Ascorbinsäure sowie Alkalimetall-, Erdalkalimetall- und Ammoniumsalzen dieser Säuren, insbesondere jedoch Ascorbinsäure
umgesetzt wird.

Um besonders hohe Ausbeuten zu erzielen, ist es bevorzugt, das erfindungsgemäße Verfahren unter Inertgasatmosphäre durchzuführen. Das Inertgas kann z.B. Stickstoff oder Argon umfassen.

Das mindestens eine Reduktionsmittel wird, bezogen auf Palladium, beispielsweise in der 1 - 3-fachen Menge der zur Reduktion zu Palladium(0) mindestens notwendigen äquivalenten Menge eingesetzt.

Pro molarem Äquivalent Palladium(II) werden beispielsweise 2 - 4 molare Äquivalente Base, beziehungsweise pro molarem Äquivalent Palladium(IV) beispielsweise 4 - 8 molare Äquivalente Base, eingesetzt.

Das mindestens eine Trihydrocarbylphosphan wird bevorzugt in der 4 - 6-fachen molaren Menge, bezogen auf Palladium eingesetzt.

Die Konzentration des eingesetzten Palladiums, bezogen auf das organische Lösemittel, kann im Bereich von beispielsweise 0,05 mol/L bis 0,25 mol/L liegen, bevorzugt im Bereich von 0,10 mol/L bis 0,15 mol/L.

Vorzugsweise handelt es sich bei dem Verfahren der vorliegenden Erfindung um eine Eintopfreaktion. Üblicherweise wird das organische Lösemittel vorgelegt, und die Reaktanten in das Lösemittel eingebracht.

Die Reaktionstemperatur kann im Bereich von 45 bis 80°C liegen, insbesondere im Bereich von 55 bis 70°C.

Die Aufarbeitung kann nach dem Fachmann geläufigen Methoden erfolgen, beispielsweise ohne dass es aufwändiger Reinigungsverfahren bedarf. So kann das entstandene Tetrakis(trihydrocarbylphosphan)palladium(0) als Feststoff von der flüssigen Phase z.B. durch Filtration, Zentrifugation oder Dekantieren getrennt werden. Der abgetrennte Feststoff kann mit Wasser gewaschen werden. Darauf können weitere Waschschritte mit wassermischbaren Alkoholen (z.B. Isopropanol) und anschließend mit Alkanen (z.B. Petrolether) erfolgen. Anschließend kann das Produkt bei vermindertem Druck getrocknet werden.

Mit dem erfindungsgemäßen Verfahren können Tetrakis(trihydrocarbylphosphan)palladium(0)-Komplexe in hoher Ausbeute ohne Verwendung von Hydrazinhydrat hergestellt werden. Insbesondere sind durch das Verfahren der vorliegenden Erfindung auf einfachem Weg Ausbeuten von 95% oder mehr bezogen auf das Palladium in der eingesetzten mindestens einen Palladiumverbindung möglich.

### Beispiele

### Beispiel 1

Es wurden ca. 215 g DMSO, 5,032 g PdCl₂ (Pd 3,000 g, 28,19 mmol), 37,5 g PPh₃ (PPh₃ 143,13 mmol) sowie 9,9 g Ascorbinsäure (C₆H₈O₆ 56,25 mmol) und 6,6 g NaHCO₃ (78,56 mmol) in einen Vierhalskolben gegeben und mit ca. 10 g DMSO nachgespült. Anschließend wurde die Mischung 20 Minuten bei Raumtemperatur gerührt. Danach wurde die Suspension auf eine Innentemperatur von 60°C aufgeheizt. Nach dem Erreichen der Temperatur hatte die Mischung eine leuchtend gelbe Farbe.

Nach einer Rührdauer von 2 Stunden bei 60°C wurde passiv auf Raumtemperatur (22°C) gekühlt.

Die Suspension wurde über einen Teflon-Schlauch mittels Argon in eine mit Argon inertisierte Umkehrfritte (Fritte G3) überführt und filtriert. Der Kolbeninhalt wurde mit 15 g DMSO ausgespült und ebenfalls auf die Fritte überführt. Es entstanden ein hellrotes Filtrat und ein hellgelber Filterkuchen.

Das Produkt auf der Umkehrfritte wurde mit 4 x 80 g vollentsalztem Wasser, mit 3 x 30 g Isopropanol und 3 x 20 g Petroleumbenzin gewaschen. Der Filterkuchen wurde für ca. 40 Minuten unter vermindertem Druck getrocknet.

Es entstand ein hellgelbes Pulver.

Das Produkt wurde auf den Palladium-Gehalt untersucht. Des Weiteren wurde ein IR-Spektrum gemessen sowie eine Elementaranalyse durchgeführt.

| | |
|---|---|
| Produkt | = 32,003 g |
| Pd-Gehalt | = 9,15 Gewichts-% (Gravimetrische Dreifachbestimmung, Theorie 9,20 Gew.-%) |
| Pd | = 2,92 g (eingesetzt: 3,00 g) |
| Ausbeute | = 97,6% bezogen auf das Palladium im eingesetzten PdCl₂ |
| IR: | entspricht dem Referenzspektrum für reines Pd(PPh₃)₄ |

Elementaranalyse: erwartet für Pd(PPh₃)₄ C 74,84%, H 5,23%, O 0%, P 10,72%; gefunden C 74,30 %, H 5,35 %, O < 0,2 %, P 10,55 %.

### Beispiele 2-4

Analog zu Beispiel 1 wurden weitere Versuche durchgeführt. Der einzige Unterschied bestand in der Art der verwendeten Base, alle übrigen Stoffe und molare Stoffmengen wurden beibehalten:

| Beispiel | 1 | 2 | 3 | 4 |
|---|---|---|---|---|
| Base | NaHCO₃ | KOH | Na₂CO₃ | NEt₃ |
| Palladiumverbindung | PdCl₂ | | | |
| Reduktionsmittel | Ascorbinsäure | | | |
| Trihydrocarbylphosphan | Triphenylphosphan | | | |
| Lösemittel | DMSO | | | |
| Ausbeute (³¹P-NMR-spektroskopisch) | 100% | 98% | 100% | 100% |

## Patentansprüche

1. Verfahren zur Herstellung von Tetrakis(trihydrocarbylphosphan)palladium(0) in organischem Lösemittel, das zu 50 bis 100 Gewichts-% aus mindestens einem polar-aprotischen Lösemittel ausgewählt aus der Gruppe bestehend aus DMF, DMSO, Aceton, gamma-Butyrolacton, N-Methyl-2-pyrrolidon, Essigsäureethylester und Acetonitril besteht, wobei
a) mindestens eine Palladiumverbindung ausgewählt aus der Gruppe bestehend aus Palladium(II)-Verbindungen und Palladium(IV)-Verbindungen, die in dem organischen Lösemittel löslich sind, mit
b) mindestens einer Base ausgewählt aus der Gruppe bestehend aus Alkalimetallhydroxiden, Alkalimetallcarbonaten, Alkalimetallhydrogencarbonaten und Triethylamin, und
c) mindestens einem Trihydrocarbylphosphan, und
d) mindestens einem organischen Reduktionsmittel, das von den restlichen in dem Verfahren eingesetzten Komponenten verschieden ist,
umgesetzt wird,
wobei die mindestens eine Palladiumverbindung ausgewählt ist aus der Gruppe bestehend aus Alkalitetrahalogenopalladaten(II), Ammoniumtetrahalogenopalladaten(II), Alkalihexahalogenopalladaten(IV), Ammoniumhexahalogenopalladaten(IV), Palladium(II)halogeniden, Palladium(II)nitrat, Palladium(II)sulfat, Bis(trihydrocarbylphosphan)palladium(II)dihalogeniden, Pd(COD)Cl₂, Pd(CH₃CN)₂Cl₂, Pd(C₆H₅CN)₂Cl₂ und Palladium(II)acetat,
wobei das mindestens eine organische Reduktionsmittel ausgewählt ist aus Ameisensäure und Ascorbinsäure sowie Alkalimetall-, Erdalkalimetall- und Ammoniumsalzen der vorgenannten Säuren, und
wobei das entstandene Tetrakis(trihydrocarbylphosphan)palladium(0) als Feststoff von der flüssigen Phase durch Filtration, Zentrifugation oder Dekantieren getrennt wird, der abgetrennte Feststoff mit Wasser gewaschen wird, gegebenenfalls weitere Waschschritte mit wassermischbaren Alkoholen und anschließend mit Alkanen erfolgen und anschließend das Produkt bei vermindertem Druck getrocknet wird.

2. Verfahren nach Anspruch 1, wobei die mindestens eine Palladiumverbindung PdCl₂ und wobei das mindestens eine organische Reduktionsmittel Ascorbinsäure ist.

3. Verfahren nach Anspruch 1 oder 2, wobei das mindestens eine Trihydrocarbylphosphan Triphenylphosphan ist.

4. Verfahren nach einem der Ansprüche 1 - 3,
**dadurch gekennzeichnet,**
**dass** das mindestens eine Reduktionsmittel, bezogen auf Palladium, in der 1 - 3-fachen Menge der zur Reduktion zu Palladium(0) mindestens notwendigen äquivalenten Menge eingesetzt wird.

5. Verfahren nach einem der Ansprüche 1 - 4,
**dadurch gekennzeichnet,**
**dass** pro molarem Äquivalent Palladium(II) 2 - 4 molare Äquivalente Base und pro molarem Äquivalent Palladium(IV) 4 - 8 molare Äquivalente Base, eingesetzt werden.

6. Verfahren nach einem der Ansprüche 1 - 5,
**dadurch gekennzeichnet,**
**dass** das mindestens eine Trihydrocarbylphosphan in der 4 - 6-fachen molaren Menge bezogen auf Palladium eingesetzt wird.

7. Verfahren nach einem der Ansprüche 1 - 6,
**dadurch gekennzeichnet,**
**dass** die Konzentration des eingesetzten Palladiums, bezogen auf das organische Lösemittel, im Bereich von 0,05 mol/L bis 0,25 mol/L liegt.

## Claims

1. A method for the production of tetrakis(trihydrocarbyl phosphane)palladium(0) in inorganic solvent, which consists of 50 to 100% by weight of at least one polar-aprotic solvent, selected from the group consisting of DMF, DMSO, acetone, gamma-butyrolactone, N-methyl-2-pyrrolidone, ethyl acetate and acetonitrile,
wherein
a) at least one palladium compound selected from the group consisting of palladium(II) compounds and palladium (IV) compounds, which are soluble in the organic solvent is reacted with
b) at least one base selected from the group consisting of alkali metal hydroxides, alkali metal carbonates, alkali metal hydrogen carbonates, and triethylamine, and
c) at least one trihydrocarbyl phosphane, and
d) at least one organic reducing agent, which differs from the remaining components used in the method,
wherein the at least one palladium compound is selected from the group consisting of alkali tetrahalogenopalladates(II), ammonium tetrahalogenopalladates(II), alkali hexahalogenopalladates(IV), ammonium hexahalogenopalladates(IV), palladium(II) halides, palladium(II) nitrate, palladium(II) sulfate, bis(trihydrocarbylphosphane)palladium(II) dihalides, Pd(COD)Cl₂, Pd(CH₃CN)₂Cl₂, Pd(C₆H₅CN)₂Cl₂, and palladium(II) acetate,
wherein the at least one organic reducing agent is selected from formic acid and ascorbic acid, as well as alkali metal, alkaline earth metal, and ammonium salts of the above-mentioned acids, and
wherein the resulting tetrakis(trihydrocarbyl phosphane)palladium(0) is separated as solid from the liquid phase by means of filtration, centrifugation or decanting, the separated solid is washed with water, optionally followed by further washing steps with water-miscible alcohols and then with alkanes, and the product is then dried at reduced pressure.

2. The method according to claim 1, wherein the at least one palladium compound PdCl₂ and wherein the at least one organic reducing agent is ascorbic acid.

3. The method according to claim 1 or 2, wherein the at least one trihydrocarbyl phosphane is triphenylphosphine.

4. The method according to any one of claims 1-3,
**characterized in**
**that** the at least one reducing agent, based on palladium, is used in the amount equal to 1- to 3-times the amount necessary at a minimum for reduction to palladium(0).

5. The method according to any one of claims 1-4,
**characterized in**
**that** 2-4 molar equivalents of a base are used per molar equivalent of palladium(II) and 4-8 molar equivalents of a base are used per molar equivalent of palladium(IV).

6. The method according to any one of claims 1-5,
**characterized in**
**that** the at least one trihydrocarbyl phosphane is used in the amount equal to 4-to 6-times the molar amount, based on palladium.

7. The method according to any one of claims 1-6,
**characterized in**
**that** the concentration of the palladium used, based on the organic solvent, lies in the range of between 0.05 mol/L and 0.25 mol/L.

## Revendications

1. Un procédé de préparation de tétrakis (trihydrocarbylphosphane) palladium (0) dans un solvant organique, lequel se compose jusqu'à 50 à 100% en poids d'au moins un solvant polaire-aprotique sélectionné dans le groupe comprenant le DMF, le DMSO, l'acétone, le gamma-butyrolactone, le N-méthyl-2-pyrrolidone, l'acétate d'éthyle et l'acétonitrile,
a) au moins un composé de palladium sélectionné dans le groupe comprenant les composés de palladium (II) et les composés de palladium (IV), lesquels sont solubles dans le solvant organique, avec
b) au moins une base sélectionnée dans le groupe comprenant les hydroxydes de métaux alcalins, les carbonates de métaux alcalins, les hydrogénocarbonates de métaux alcalins et la triéthylamine et
c) au moins une trihydrocarbylphosphane et
d) au moins un agent de réduction organique qui est différent des autres composants utilisés dans le procédé,
est mis en œuvre,
au moins un composé de palladium étant sélectionné dans le groupe comprenant les tétra-halogénopalladates d'alcalin (II), les tétra-halogénopalladates d'ammonium (II), les hexa-halogénopalladates d'alcalin (IV), les hexa-halogénopalladates d'ammonium (IV), les halogénures de palladium (II), le nitrate de palladium (II), le sulfate de palladium (II), les dihalogénures de bis(trihydrocarbylphophane) de palladium (II), le Pd(COD)Cl₂, le Pd(CH₃CN)₂Cl₂, le Pd(C₆H₅CN)₂Cl₂ et l'acétate de palladium (II),
au moins un agent de réduction organique étant sélectionné à partir d'acide formique et d'acide ascorbique ainsi que de sels de métaux alcalins, sels de métaux alcalino-terreux et sels d'ammonium des acides précités et
le tétrakis (trihydrocarbylphosphane) palladium (0) généré étant, en tant que solide, séparé de la phase liquide par filtration, centrifugation ou décantation, le solide séparé étant lavé avec de l'eau, le cas échéant d'autres étapes de lavage avec des alcools miscibles à l'eau, puis avec des alcanes, étant réalisées et le produit étant ensuite séché avec une pression réduite.

2. Procédé conformément à la revendication n°1, au moins un composé de palladium PdCl₂ et au moins un agent de réduction organique étant de l'acide ascorbique.

3. Procédé conformément à la revendication n°1 ou n°2, au moins une trihydrocarbylphosphane étant de la triphénylphosphane.

4. Procédé conformément à l'une des revendications n°1 à n°3,
**caractérisé en ce que**
au moins un agent de réduction, en se basant sur le palladium, est utilisé dans la quantité simple à triple de la quantité équivalente minimum nécessaire pour la réduction du palladium (0).

5. Procédé conformément à l'une des revendications n°1 à n°4,
**caractérisé en ce que**
2 à 4 équivalents molaires de base par équivalent molaire de palladium (II) et 4 à 8 équivalents molaires de base par équivalent molaire de palladium (IV) sont utilisés.

6. Procédé conformément à l'une des revendications n°1 à n°5,
**caractérisé en ce que**
au moins une trihydrocarbylphosphane est utilisée dans la quantité molaire quadruple à sextuple en se basant sur le palladium.

7. Procédé conformément à l'une des revendications n°1 à n°6,
**caractérisé en ce que**
la concentration du palladium utilisé, en se basant sur le solvant organique, est comprise entre 0,05 mol/l et 0,25 mol/l.
